# FASCICULE DE BREVET EUROPEEN

(11) **EP 3 262 827 B1**
(45) Date de publication et mention de la délivrance du brevet: **25.11.2020**
(21) Numéro de dépôt: 16714472.4
(22) Date de dépôt: 22.02.2016
(51) Int. Cl.: H04M 1/663, H04M 1/67, H04M 3/14, H04W 52/02, G10L 25/78

(54) **PROCEDE D'UTILISATION D'UNE GESTION AUTOMATIQUE DE COMMUNICATION, PROCEDE ET DISPOSITIF DE GESTION AUTOMATIQUE DE COMMUNICATION ET TERMINAL L'UTILISANT**
VORRICHTUNG ZUR VERWENDUNG VON AUTOMATISCHER KOMMUNIKATIONSVERWALTUNG, VERFAHREN UND VORRICHTUNG ZUR AUTOMATISCHEN KOMMUNIKATIONSVERWALTUNG UND ENDGERÄT MIT VERWENDUNG DAVON
METHOD FOR USING AUTOMATIC COMMUNICATION MANAGEMENT, METHOD AND DEVICE FOR AUTOMATIC COMMUNICATION MANAGEMENT, AND TERMINAL USING SAME

(30) Priorité: 23.02.2015 FR 1551527
(43) Date de publication de la demande: 03.01.2018
(73) Titulaire: ORANGE, 75015 Paris (FR)
(72) Inventeur: ROUSSEL-GALLE, Olivier, 22200 Saint Agathon (FR); SIMON, Pierre-Henri, 22300 Lannion (FR)
(86) Numéro de dépôt international: PCT/FR2016/050402
(87) Numéro de publication internationale: WO 2016/135403

(56) Documents cités:
- EP-A1- 2 824 897
- WO-A1-2011/053428
- US-A1- 2003 143 986
- US-B1- 6 662 026
- US-B1- 7 283 624

## Description

L'invention concerne une gestion automatique de communication. En particulier, elle concerne une clôture automatisée de communication dans des circonstances d'établissement de communication intempestive, notamment à partir de terminaux mobiles.

Avec les téléphones fixes était connu la gestion du décroché intempestif du combiné. En effet, le fait de bousculer le combiné sur sa base peut déclencher le décrochage du téléphone qui empêche alors toutes personnes le souhaitant de se mettre en communication avec l'utilisateur du téléphone décroché.

Pour résoudre ce problème, il était notamment proposé qu'en absence d'activité lors d'un décroché, le téléphone soit déconnecté du réseau comme l'enseigne le document US4922529, permettant au téléphone dont le combiné a été involontairement décroché d'être à nouveau appelé.

La téléphonie mobile et, en particulier, le transport du téléphone mobile dans une poche ou avec d'autres éléments dans un sac peut déclencher par inadvertance non seulement un décroché mais encore un établissement d'une communication par appui sur une touche bis ou un contact préenregistré. Par exemple, le cas typique d'appel fortuit par frottement ou pression dans un étui ou une poche est l'appel du dernier correspondant appelé ou de celui ouvert dans le répertoire des contacts.

Pour éviter ces établissements intempestifs de communication, un verrouillage des terminaux de communication mobile est proposé : verrouillage du clavier et/ou de l'écran du terminal de communication mobile. Cette solution technique évite l'établissement intempestif de communication à condition que le terminal soit verrouillé, et que le verrouillage ne puisse pas être désactivé par inadvertance.

L'expérience montre, en effet, que, malgré tout, des appels sont parfois passés involontairement avec des téléphones mobiles. Outre le dérangement causé à l'appelé : appel sans correspondant au bout de la ligne, message téléphoniques inaudibles, l'impossibilité pour l'appelé de demander d'établir une communication avec l'appelant pour vérifier que tout va bien..., l'appelant découvre a posteriori de nombreuses communications très longues qu'il ne s'explique pas, parfois interrompues par la fin de la messagerie de l'appelé.

La demande européenne EP 2824897 propose une gestion des appels anormaux. Lors d'un appel vocal, le procédé détecte en temps réel si le terminal est en statut appel « vide ». Si c'est le cas, le procédé raccroche. Après le démarrage d'un appel vocal, un module de reconnaissance vocal démarre pour acquérir les entrées audio des deux côtés de l'appel. Un module de décision vérifie si l'intensité vocale de l'appel est normale sinon il décide que le terminal est dans un statut silencieux et déclenche un minuteur puis interromps l'appel sur détection d'une action de l'utilisateur. Si la détection d'un appel anormal est effectuée automatiquement, la solution proposée par cette demande européenne nécessite une action de l'utilisateur pour clore la communication en cours détectée comme anormale. Le brevet américain US7283624 décrit détection d'activité vocale lors d'une communication permettant à un dispositif du réseau de couper la communication. La demande internationale WO2011053428 décrit aussi une détection vocale déclenchant la fin d'un appel. L'inconvénient de ces trois systèmes est qu'ils clôturent de manière intempestive une communication sonore en cours durant laquelle l'activité vocale aura été interrompue.

La demande américaine US2003143986 propose aussi de résoudre le problème des appels accidentels, notamment à partir de téléphone mobile, mais aussi de faux-raccroché. Pour cela, elle propose un procédé de clôture automatique de communication dans lequel, lorsqu'une communication en cours est détectée par le terminal, le niveau du signal audio du microphone du terminal est comparé avec un niveau de référence. Si le niveau du signal audio est inférieur, cela déclenche un signal d'alerte à une unité de déconnexion qui déclenche un minuteur puis la clôture de la communication si le signal audio n'est pas remonté. L'inconvénient d'un tel procédé ne permettant la clôture automatiquement uniquement lorsque le signal audio sortant est inférieure à un niveau de référence est qu'il ne permet la clôture de toutes les communications intempestives qu'à condition que tous les terminaux en communication mettent en œuvre le procédé de clôture automatique de communication de cette demande américaine.

Dans certaines circonstances de communication, la clôture automatique de la communication peut être s'avérer gênantes voire dangereuses. En effet, dans le cas d'un appel à des secours officiels (Pompiers, Samu, Police...) ou non (famille, voisin...), l'appelant peut se retrouver au moins temporairement dans l'incapacité de communiquer déclenchant une clôture automatique qui peut empêcher les secours de déterminer par exemple la localisation de l'appelant et/ou d'accompagner l'appelant le temps que les secours arrivent sur place (conseils médicaux, présence...).

Le brevet américain US6662026 décrit un appareil de surveillance d'appel accidentel apte à clore un appel suite à une détection d'absence de conversation à condition que l'utilisateur appelant n'ait pas agit suite à une alarme déclenchée par la détection. Cet appareil de surveillance d'appel clôturera une communication uniquement à condition que le niveau de décibels entrant et le niveau de décibels sortant chutent tous les deux pendant une durée prédéterminée et que l'utilisateur ne réagisse pas. Ainsi, tant que l'un des interlocuteurs sera actif : en sollicitant l'interlocuteur absent « Allo...Mr... » ou en raison d'un fond sonore élevé, l'appareil de surveillance de ce brevet ne clôturera pas de tels appels accidentels. En outre, ce brevet prévoit en outre de reconnaitre que le numéro appelé est un numéro spécifique tel qu'un numéro d'appel d'urgence ou un numéro de transmission par fax ou modem pour désactiver l'appel de surveillance d'appel accidentel pour l'appel en cours.

Un des buts de la présente invention est d'apporter des améliorations par rapport à l'état de la technique.

Un objet de l'invention est une utilisation d'une gestion automatique de communication. L'utilisation mis en œuvre par un terminal de communication d'un utilisateur comportant un déclenchement, suite à un établissement d'une communication entre au moins le terminal de communication de l'utilisateur et au moins un autre terminal de communication : un terminal de communication requérant l'établissement d'une communication et au moins un terminal de communication destinataire de la communication requise, d'une gestion automatique de communication activée qui permet un déclenchement d'une clôture de la communication établie en cours en fonction du niveau sonore vocal détecté sur au moins un flux audio de la communication établie en cours.

Ainsi, si l'établissement de la communication est détecté comme involontaire en raison du niveau sonore vocal de la communication, la communication sera close.

Avantageusement, l'utilisation comporte une activation par l'utilisateur au moyen d'une interface utilisateur du terminal de communication de l'utilisateur d'une gestion automatique de communication.

Ainsi, l'utilisateur peut choisir d'activer ou non la gestion automatique des communications permettant de gérer automatiquement les communications intempestivement émises et/ou reçues dans certaines occasions et d'éviter une clôture des communications intempestives dans d'autres occasions.

Un objet de l'invention est encore un procédé de gestion automatique de communication en cours entre au moins deux terminaux de communication : un terminal de communication requérant l'établissement d'une communication et au moins un terminal de communication destinataire de la communication requise, la communication en cours comportant plusieurs flux audio provenant des terminaux de communication, le procédé de gestion comportant :
- un déclenchement automatique d'une clôture de la communication en cours, le déclenchement étant effectué dès qu'un niveau sonore vocal détecté sur un des flux audio (f1, f2...fn) de la communication en cours pendant une durée prédéterminée lors de la communication en cours est inférieur à un seuil prédéterminé, et
- une détermination du maintien automatique (CMT) d'une communication en cours en fonction d'au moins un paramètre (pp) prédéterminé de mode d'utilisation d'un terminal de communication de la communication en cours, la détermination de maintien (CMT) commande (cnt) l'empêchement de toute clôture automatique de communication de la communication en cours.

Ainsi l'invention permet la gestion de communication involontaire basée sur la détection du niveau vocal sonore, notamment sur au moins un flux audio de la communication établie.

Ainsi, pour des communications pré-identifiées, le niveau sonore vocal faible de la communication en cours ne déclenchera pas, exceptionnellement, la clôture de la communication par la gestion automatique de communication.

Avantageusement, le procédé de gestion comporte une détection du niveau sonore vocale de la communication en cours.

Ainsi, la détection du niveau sonore vocal est une alternative à d'autre type de détection de communication involontaire permettant de vérifier le caractère involontaire de la communication en se basant sur l'opportunité pour cette communication de permettre l'objet d'une communication à savoir un échange vocal.

Avantageusement, le au moins un paramètre prédéterminé comporte au moins un des paramètres prédéterminé suivants :
- Un identifiant d'un terminal de communication destinataire de la communication en cours est un identifiant prédéterminé;
- Un paramètre de mode d'utilisation du terminal de communication requérant de la communication en cours est en mode muet.

Ainsi, les communications pré-identifiées pour lesquelles le niveau sonore vocal faible de la communication en cours ne déclenchera pas, exceptionnellement, la clôture de la communication par la gestion automatique de communication, sont notamment :
- les communications avec un destinataire pré-identifié tels qu'un centre de secours (pompier, Samu, centre de télésurveillance, personnel médical, numéro d'appel d'urgence préenregistré... ) permettant ainsi à l'appelant dans une situation de détresse de pouvoir rester en communication avec une personne l'accompagnant durant cette communication le temps que les secours arrivent sur place ;
- les conférences téléphoniques auxquels certains participants assistent en mode muet.

Avantageusement, le procédé de gestion est déclenché par un établissement d'une communication entre les au moins deux terminaux de communication.

Ainsi, soit le procédé de gestion surveille l'établissement des communications et se déclenche lors de l'établissement d'une communication, soit le procédé d'établissement de communication comporte un déclenchement du procédé de gestion après avoir reçu l'acceptation de la mise en communication par les terminaux destinataires.

Avantageusement, le procédé de gestion est mis en œuvre par au moins un des dispositifs suivants :
- le terminal de communication requérant,
- au moins un des au moins un terminaux de communication destinataires,
- un serveur de communication par lequel passent les flux audio durant la communication en cours.

Ainsi, le terminal de l'appelant mettra lui-même fin aux communications qu'il aura lui-même requis de manière involontaire et/ou le terminal de l'appelé mettra lui-même fin aux communications intempestives qu'il recevra ou les terminaux des utilisateurs seront déchargés des traitements nécessaires à la gestion de communication par le serveur de communication.

Avantageusement, la détection du niveau sonore vocal est effectuée sur le flux audio provenant du terminal de communication requérant. Ainsi, la gestion automatique de communication clos les communications ayant été requises involontairement.

Avantageusement, la détection du niveau sonore vocal est effectuée sur le flux audio provenant d'au moins un des au moins un terminaux de communication destinataires. Ainsi, la gestion automatique de communication clos les communications ayant été acceptées involontairement.

Avantageusement, la durée prédéterminée est inférieure à la durée de communication avant basculement sur messagerie. Ainsi, la gestion automatique de communication évite la surcharge de la messagerie en lien avec les communications intempestives.

Avantageusement, lorsque la communication est effectuée entre un terminal de communication requérant et plusieurs terminaux de communication destinataires, la clôture de communication est déclenchée uniquement pour le terminal de communication destinataires dont provient un flux audio dont le niveau sonore vocal détecté est déclencheur d'une clôture de communication.

Ainsi, lors d'une conférence téléphonique, si l'un des terminaux destinataires a accepté involontairement l'entrée dans la conférence téléphonique, la communication avec ce terminal destinataire sera close mais la communication entre les autres terminaux participants continuera sauf bien sûr si le terminal destinataire est en mode muet.

Avantageusement, selon une implémentation de l'invention, les différentes étapes du procédé selon l'invention sont mises en œuvre par un logiciel ou programme d'ordinateur, ce logiciel comprenant des instructions logicielles destinées à être exécutées par un processeur de données d'un dispositif de gestion automatique de communication et étant conçus pour commander l'exécution des différentes étapes de ce procédé.

L'invention vise donc aussi un programme comprenant des instructions de code de programme pour l'exécution des étapes du procédé de gestion automatique de communication lorsque ledit programme est exécuté par un processeur.

Ce programme peut utiliser n'importe quel langage de programmation et être sous la forme de code source, code objet ou code intermédiaire entre code source te code objet tel que dans une forme partiellement compilée ou dans n'importe quelle autre forme souhaitable.

Un objet de l'invention est également un dispositif de gestion automatique de communication en cours entre au moins deux terminaux de communication : un terminal de communication requérant l'établissement d'une communication et au moins un terminal de communication destinataire de la communication requise, la communication en cours comportant plusieurs flux audio provenant des terminaux de communication, le dispositif de gestion comportant :
- un déclencheur automatique de clôture de la communication en cours, le déclencheur étant apte à clore la communication en cours dès qu'un niveau sonore vocal détecté sur un des flux audio de la communication en cours pendant une durée prédéterminée lors de la communication en cours est inférieur à un seuil prédéterminé, et
- un module de maintien apte à déterminer un maintien automatique d'une communication en cours en fonction d'au moins un paramètre de mode d'utilisation d'un terminal de communication de la communication en cours, le module de maintien étant apte à commander l'empêchement de toute clôture automatique de communication de la communication en cours suite à la détermination du maintien.

Un objet de l'invention est aussi un terminal de communication comportant :
- un module de communication avec au moins un terminal de communication,
- un dispositif de gestion automatique de communication en cours selon l'invention.

Les caractéristiques et avantages de l'invention apparaîtront plus clairement à la lecture de la description, faite à titre d'exemple, et des figures s'y rapportant qui représentent :
- Figure 1, un schéma simplifié d'un procédé d'une gestion automatique de communication selon l'invention,
- Figure 2, un schéma simplifié d'un procédé de gestion automatique de communication selon l'invention,
- Figures 3a et 3b, des schémas simplifiés respectivement d'une architecture de communication mettant en œuvre l'invention, et d'un dispositif de gestion automatique de communication selon l'invention utilisé par cette architecture de communication,
- Figures 4a et 4b, des diagrammes d'échanges simplifiés illustrant la mise en œ uvre d'un procédé selon l'invention, respectivement dans le cas d'une communication entre deux terminaux de communication, et d'une conférence entre trois terminaux de communication.

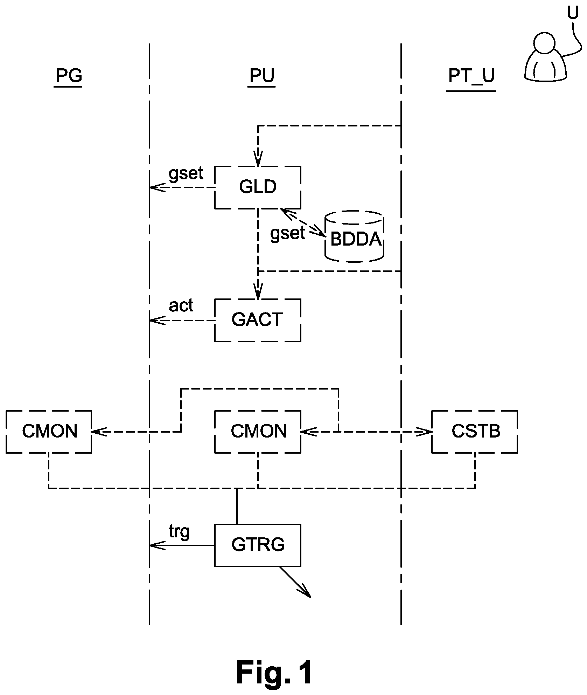

La figure 1 illustre un schéma simplifié d'un procédé d'une gestion automatique de communication selon l'invention.

Le procédé d'utilisation PU d'une gestion automatique de communication est notamment mis en œuvre par un terminal de communication d'un utilisateur. Le procédé d'utilisation PU comporte un déclenchement, suite à un établissement d'une communication entre au moins le terminal de communication de l'utilisateur et au moins un autre terminal de communication : un terminal de communication requérant l'établissement d'une communication et au moins un terminal de communication destinataire de la communication requise, d'une gestion PG automatique de communication activée qui permet un déclenchement d'une clôture de la communication établie en cours en fonction du niveau sonore vocal détecté sur au moins un flux audio de la communication établie en cours.

En particulier, un utilisateur U interagit avec un terminal de communication au moyen d'un procédé mis en œuvre par le terminal de communication PT_U. Ce procédé comporte notamment un traitement des interactions de l'utilisateur avec le terminal de communication, et une gestion des communications du terminal comportant, par exemple, un établissement d'une communication CSTB avec un deuxième terminal de communication.

Le traitement des interactions de l'utilisateur PT_U reconnait, par exemple, une demande de l'utilisateur de chargement d'un procédé de gestion automatique des communications PG. Le procédé d'utilisation PU reçoit notamment une requête de chargement du traitement des interactions PT_U, et comporte un chargement GLD du procédé de gestion automatique PG des communications sur le terminal de communication de l'utilisateur U, notamment à partir d'une base de données, tels qu'un catalogue d'applications BDDA accessibles par le terminal de l'utilisateur U. Le chargement GLD reçoit alors le procédé de gestion *gset* et le fournit *gset* au*,* voire l'installe sur le terminal de l'utilisateur afin qu'il puisse le mettre en œuvre. Dans une autre alternative, le procédé de gestion PG est, par exemple, préinstallé sur le terminal de communication de l'utilisateur U.

En particulier, le procédé d'utilisation PU comporte une activation du procédé de gestion automatique GACT. Cette activation GACT est effectuée soit directement dès que le chargement GLD est terminé, soit sur commande de l'utilisateur au moyen du traitement des interactions de l'utilisateur avec le terminal de communication PT_U. Ainsi, notamment, l'activation GACT est déclenchée par l'utilisateur au moyen d'une interface utilisateur du terminal de communication de l'utilisateur d'une gestion automatique de communication. Ainsi, l'utilisateur peut choisir d'activer ou non la gestion automatique des communications permettant de gérer automatiquement les communications intempestivement émises et/ou reçues dans certaines occasions et d'éviter une clôture des communications intempestives dans d'autres occasions.

L'activation GACT envoie une commande d'activation *act* au procédé de gestion automatique. Ainsi, l'utilisateur U peut activer et/ou désactiver le procédé de gestion automatique des communications en fonction de ses besoins et notamment de ses contextes de communication.

Le procédé de gestion de communication automatique PG étant activé, soit le procédé d'utilisation, soit le procédé de gestion automatique de communication comporte éventuellement une surveillance CMON des communications du terminal de communication, en particulier de l'établissement des communications CSTB.

En particulier, le procédé d'utilisation PU comporte un déclenchement GTRG de la gestion automatique de communication transmettant une commande de déclenchement trg au procédé de gestion PG. La transmission par le déclenchement GTRG de cette commande trg est fonction de l'établissement d'une communication avec le terminal de communication de l'utilisateur. Ainsi, le déclenchement GTRG reçoit des données concernant un établissement d'une communication avec le terminal de communication de l'utilisateur soit directement de l'établissement de communication CSTB du procédé mis en œuvre par le terminal de communication PT_U, soit de surveillance CMON mise en œuvre soit par le procédé de gestion PG soit par le procédé d'utilisation PU.

Dans une variante de l'invention, le déclenchement GTRG et, le cas échéant, la surveillance n'est mise en œuvre que si le procédé de gestion PG a été activé GACT.

Ainsi, si l'établissement de la communication est détecté comme involontaire en raison du niveau sonore vocal de la communication, la communication sera close.

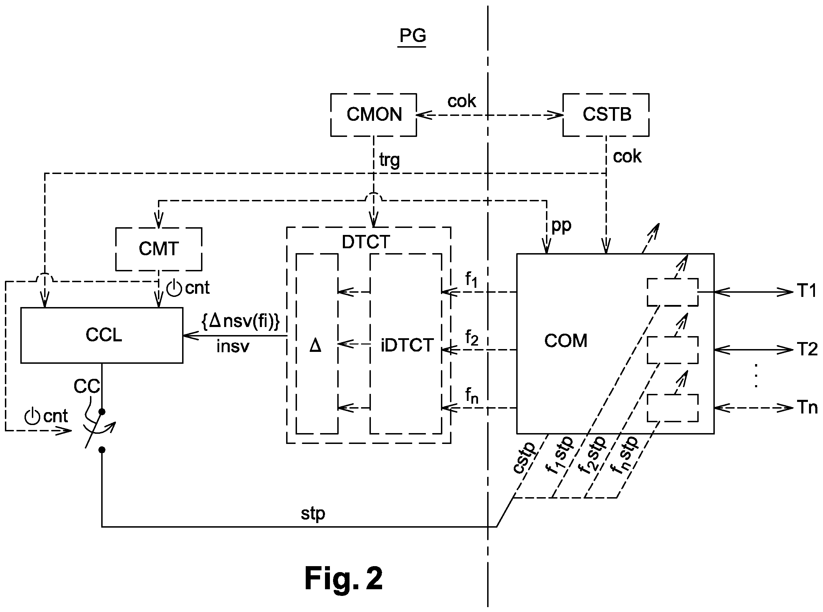

La figure 2 illustre un schéma simplifié d'un procédé de gestion automatique de communication selon l'invention.

Le procédé de gestion PG automatique de communication en cours entre au moins deux terminaux de communication : un terminal de communication requérant T1 l'établissement d'une communication et au moins un terminal de communication destinataire T2...Tn de la communication requise, comporte un déclenchement CCL d'une clôture de la communication en cours en fonction d'un niveau sonore vocal nsv détecté pendant une durée prédéterminée A lors de la communication en cours.

Ainsi l'invention permet la gestion de communication involontaire basée sur la détection du niveau vocal sonore.

L'invention permet d'éviter que la communication intempestive établie ne dure trop longtemps empêchant d'autres interlocuteurs de joindre les utilisateurs des terminaux impliqués dans la communication intempestive en cours.

En particulier, un établissement d'une communication CSTB déclenche une gestion des échanges COM de la session de communication établie et, en parallèle, déclenche *cok* la mise en œuvre du procédé de gestion PG, en particulier l'étape de déclenchement de clôture de communication CCL.

La gestion des échanges COM permet à plusieurs terminaux de communication dont un terminal requérant T1 et au moins un terminal destinataire T2... Tn d'échanger lors de cette session de communication, soit des flux audio, soit des flux vidéo, soit des flux de données. L'utilisateur du terminal requérant T1 discute avec les utilisateurs des terminaux destinataires T2...Tn : un flux audio f1 est donc émis par le terminal requérant T1 à destination des autres terminaux participant à la communication T2...Tn, et de manière similaires des flux audio f2... fn sont émis par les terminaux destinataires T2...Tn à destination des autres terminaux participant à la communication T1...Tn.

Le procédé de gestion PG comporte, notamment, une surveillance de l'établissement de communication CMON qui soit échange avec l'établissement de communication CSTB soit capte le signal *cok* d'ouverture de session de communication fourni par l'établissement de communication CSTB.

La surveillance de l'établissement de communication CMON déclenche la mise en œuvre du procédé de gestion PG, en particulier, directement ou indirectement du déclenchement de clôture de communication CCL. Par exemple, la surveillance de l'établissement de communication CMON déclenche une détection de niveau sonore vocal DTCT, mise en œuvre éventuellement par le procédé de gestion PG, qui fournit soit le niveau sonore vocal détecté *nsv* soit une information sur le niveau sonore vocal détecté *insv* au déclenchement de clôture de communication CCL.

Le déclenchement de clôture de communication CCL détermine en fonction du niveau sonore vocal de la communication en cours si cette communication est involontaire de la part d'au moins un des utilisateurs des terminaux T1 ...Tn de communication participant à la communication établie. Ainsi, le déclenchement de clôture de communication CCL vérifie soit le niveau sonore vocal de la communication en cours dans son ensemble, c'est à dire sur l'ensemble des flux audio provenant de tous les terminaux participants : f1...fn ; soit indépendamment le niveau sonore vocal de chaque flux audio f1... fn.

Notamment, le déclenchement de clôture de communication CCL détermine que la communication est involontaire si le niveau sonore vocal *nvs* est inférieur à un seuil prédéterminé pendant une durée prédéterminée. Ainsi, le déclenchement de clôture de communication CCL recherche les communications dans lesquelles un silence prolongé, voire un une conversation inaudible ou difficilement audible, est détecté en provenance d'au moins un des utilisateurs des terminaux participants à la communication en cours.

Dans ces cas, le déclenchement de clôture de communication CCL commande, en particulier, une clôture *stp* de la communication en cours établie par l'établissement de communication CSTB, notamment en transmettant cette commande à la gestion des échanges COM. Notamment, la commande de clôture *stp* spécifie une clôture soit de la communication dans sa totalité *cstp,* soit de la participation d'au moins un des terminaux participants à la communication f1stp, f2stp...fₙstp en fonction du niveau sonore de chacun des flux audio f1 ...fn.

En particulier, le procédé de gestion PG comporte une détection DTCT du niveau sonore vocale de la communication en cours.

Ainsi, la détection du niveau sonore vocal est une alternative à d'autre type de détection de communication involontaire permettant de vérifier le caractère involontaire de la communication en se basant sur l'opportunité pour cette communication de permettre l'objet d'une communication à savoir un échange vocal.

La détection DTCT effectue soit une détection globale du niveau sonore vocal nsv sur l'ensemble f des flux audio échangés f1, f2...fn durant la communication en cours, soit une détection du niveau sonore vocal indépendamment {nsv(fi)}i=1...n sur chacun des flux audio échangés f1, f2...fn durant la communication en cours. En particulier, la détection du niveau sonore vocal est effectuée sur le flux audio f1 provenant du terminal de communication requérant. Ainsi, la gestion automatique de communication clos les communications ayant été requises involontairement : silence ou conversation inaudible de la part de l'utilisateur du terminal requérant T1 soit parce que le terminal T1 est au fond d'un sac, d'une poche ou simplement loin de l'utilisateur... En particulier, la détection du niveau sonore vocal est effectuée sur le flux audio f2... fn provenant d'au moins un des au moins un terminaux de communication destinataires T2...Tn. Ainsi, la gestion automatique de communication clôt les communications ayant été acceptées involontairement.

En particulier, lorsque la communication est effectuée entre un terminal de communication requérant T1 et plusieurs terminaux de communication destinataires, la clôture de communication CCL est déclenchée uniquement pour le terminal de communication destinataires dont provient un flux audio dont le niveau sonore vocal détecté est déclencheur d'une clôture de communication. Ainsi, lors d'une conférence téléphonique, si l'un des terminaux destinataires a accepté involontairement l'entrée dans la conférence téléphonique, la communication avec ce terminal destinataire sera close mais la communication entre les autres terminaux participants continuera sauf bien sûr si le terminal destinataire est en mode muet.

En particulier, la détection DTCT comporte une détection instantanée iDTCT du niveau sonore vocal fournissant le niveau vocal à chaque instant et une temporisation Δ permettant à la détection DTCT de fournir le niveau vocal sonore durant un temps prédéterminé. Dans ce cas, la détection DTCT fournit au déclenchement de clôture de communication CCL un niveau sonore moyen sur ce temps prédéterminé {Δ nsv(fi)}i=1...n.

Eventuellement, la détection DTCT comporte une vérification (non illustré) du niveau sonore vocal par rapport à un niveau sonore vocal seuil permettant de vérifier si le flux f, f1... fn porte un silence prolongé (niveau vocal seuil = 0) et/ou une conversation inaudible (niveau sonore vocal seuil déterminé en fonction du seuil d'audition moyen) prolongé, et de fournir une information sur le niveau vocal sonore *insv* au déclenchement de clôture de communication CCL.

En particulier, la détection DTCT comporte au moins deux temporisations distinctes (non illustrées) en fonction du niveau sonore vocal détecté, c'est-à-dire que le silence prolongé sera détecté sur une durée prédéterminé inférieur à une conversation inaudible. Ainsi, le déclenchement de clôture de communication fermera stp la communication plus rapidement dans le cas d'un silence prolongé que dans le cas d'une conversation inaudible permettant à l'utilisateur ayant soit mal positionné le combiné de son terminal soit s'étant ponctuellement éloigné de celui-ci (accidentellement ou pour aller récupérer un objet) de pouvoir continuer sa conversation sans que la communication soit coupé de manière intempestivement par le procédé de gestion PG automatique de communication de l'invention.

Dans le cas d'une requête intempestive de communication, l'utilisateur du terminal de communication requérant T1 ne sachant pas qu'il a établi une communication avec au moins un autre terminal de communication T2, si l'utilisateur du terminal destinataire ne répond pas, la communication va automatiquement basculer sur la messagerie du terminal destinataire.
En réglant la durée prédéterminée de manière, en particulier, à ce qu'elle soit inférieure à la durée de communication avant basculement sur messagerie, le basculement des communications intempestives sur la messagerie pourra être évité. Ainsi, la gestion automatique de communication évite la surcharge de la messagerie en lien avec les communications intempestives.

En particulier, le procédé de gestion comporte une détermination de maintien CMT de la communication en cours en fonction d'au moins un paramètre prédéterminé pp de la communication en cours, la détermination de maintien commande l'empêchement de toute clôture automatique de communication de la communication en cours. Cette détermination de maintien CMT est effectuée soit par désactivation, soit par court-circuitage du déclenchement de clôture de communication en fonction d'au moins un paramètre prédéterminé de la communication en cours. La détermination de maintien CMT envoie une commande de maintien *cnt* soit directement au déclenchement de clôture de communication CCL soit à un court-circuitage CC placé sur la sortie du déclenchement de clôture de communication CCL. Ainsi, lorsque la détermination de maintien MNT détermine que la communication ne doit pas être clôturée automatiquement, elle empêche le déclenchement de clôture de communication CCL d'effectuer son traitement.

Ainsi, pour des communications pré-identifiées, le niveau sonore vocal faible de la communication en cours ne déclenchera pas, exceptionnellement, la clôture de la communication par la gestion PG automatique de communication.

Notamment, la détermination de maintien CMT est déclenchée soit avec le procédé de gestion PG dans sa globalité, soit par l'établissement de communication CSTB, soit par le déclenchement de clôture de communication CCL lors de son déclenchement. Ainsi, dès qu'une communication est établie, la détermination de maintien CMT est mise en œuvre. La détermination de maintien MNT soit capture un ou plusieurs paramètres pp de la communication en cours, soit les reçoit de la gestion des échanges COM suite au déclenchement direct ou indirect de la détermination de maintien MNT par l'établissement de communication CSTB.

En particulier, le au moins un paramètre prédéterminé comporte au moins un des paramètres prédéterminé suivant :
- Un identifiant d'un terminal de communication destinataire de la communication en cours est un identifiant prédéterminé;
- Un paramètre de mode d'utilisation du terminal de communication requérant de la communication en cours est en mode muet.

Ainsi, les communications pré-identifiées pour lesquelles le niveau sonore vocal faible de la communication en cours ne déclenchera pas, exceptionnellement, la clôture de la communication par la gestion automatique de communication, sont notamment :
- les communications avec un destinataire pré-identifié tels qu'un centre de secours (pompier, Samu, centre de télésurveillance, personnel médical, numéro d'appel d'urgence préenregistré... ) permettant ainsi à l'appelant dans une situation de détresse de pouvoir rester en communication avec une personne l'accompagnant durant cette communication le temps que les secours arrivent sur place ;
- les conférences téléphoniques auxquels certains participants assistent en mode muet.

En particulier, le procédé de gestion PG est déclenché par un établissement d'une communication CSTB entre les au moins deux terminaux de communication.

Ainsi, soit le procédé de gestion surveille l'établissement des communications et se déclenche lors de l'établissement d'une communication, soit le procédé d'établissement de communication comporte un déclenchement du procédé de gestion après avoir reçu l'acceptation de la mise en communication par les terminaux destinataires.

En particulier, le procédé de gestion PG est mis en œuvre par au moins un des dispositifs suivants :
- le terminal de communication requérant T1,
- au moins un des au moins un terminaux de communication destinataires T2... Tn,
- un serveur de communication par lequel passent les flux audio durant la communication en cours.

Ainsi, le terminal de l'appelant T1 mettra lui-même fin aux communications qu'il aura lui-même requis de manière involontaire et/ou le terminal de l'appelé T2... Tn mettra lui-même fin aux communications intempestives qu'il recevra ou les terminaux des utilisateurs seront déchargés des traitements nécessaires à la gestion de communication par le serveur de communication.

Un mode de réalisation particulier de l'invention est un programme comprenant des instructions de code de programme pour l'exécution des étapes du procédé de gestion PG automatique de communication lorsque ledit programme est exécuté par un processeur.

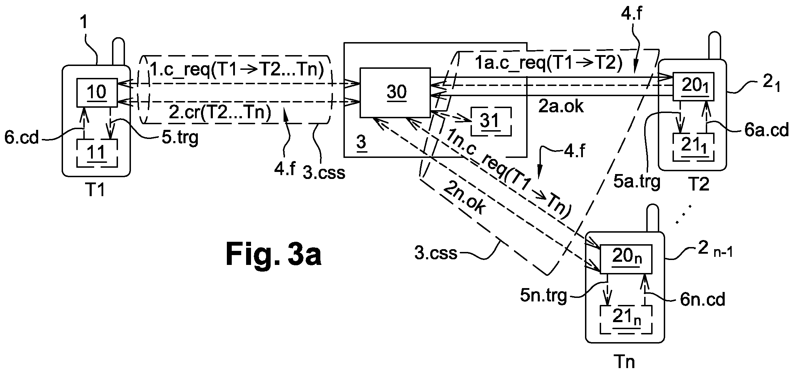

La figure 3a illustre un schéma simplifié d'une architecture de communication mettant en œuvre l'invention.

L'architecture de communication comporte au moins deux terminaux de communication 1 et 2₁, en particulier un terminal requérant 1 et au moins un terminal destinataire 2₁... 2ₙ₋₁. Chacun des terminaux de communication 1, 2₁... 2ₙ₋₁ comporte un module de communication respectivement 10, 20₁... 20ₙ₋₁. Le module de communication 10, 20₁... 20ₙ₋₁ comporte au moins un transmetteur permettant d'émettre au moins un flux audio vers un autre terminal de communication et un récepteur permettant de recevoir au moins un flux audio d'un autre terminal de communication.

En particulier, l'architecture de communication comporte un dispositif de communication 3 permettant notamment d'établir une communication entre au moins deux des terminaux de communication 1, 2₁... 2ₙ₋₁.

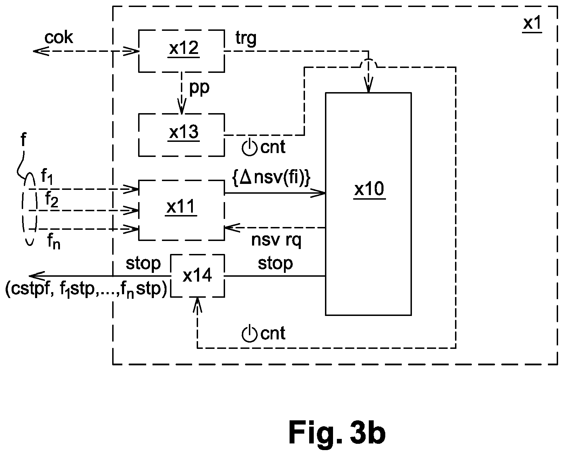

Au moins l'un des dispositifs de l'architecture de communication comporte un dispositif de gestion automatique de communication selon l'invention 11, 21₁... 21ₙ₋₁, 31. Ce dispositif de gestion est illustré plus en détail sur la figure 3b.

En particulier, au moins un terminal de communication 1, 2₁... 2ₙ₋₁ comporte :
- un module de communication 10, 20, ... 20ₙ₋₁ avec au moins un terminal de communication 1, 2₁ ... 2ₙ₋₁,
- un dispositif de gestion 11, 21₁...21ₙ₋₁ automatique de communication en cours entre le terminal de communication et au moins un autre terminal de communication : un terminal de communication requérant l'établissement d'une communication et au moins un terminal de communication destinataire de la communication requise, le dispositif de gestion comportant un déclencheur de clôture de la communication en cours en fonction d'un niveau sonore vocal détecté pendant une durée prédéterminée lors de la communication en cours.

La figure 3b illustre un schéma simplifié d'un dispositif de gestion automatique de communication selon l'invention utilisé par l'architecture de communication de la figure 3a.

Le dispositif de gestion x1 est implémenté dans un seul ou plusieurs des dispositif de l'architecture de communication de la figure 3a, notamment sous la forme du dispositif de gestion 11 du terminal de communication 1, du dispositif de gestion 21₁...21ₙ₋₁ du terminal de communication respectif 2₁... 2ₙ₋₁, voire du dispositif de gestion 31 du dispositif de communication 3.

Le dispositif de gestion x1 permet un gestion automatique de communication en cours entre au moins deux terminaux de communication: un terminal de communication 1 requérant l'établissement d'une communication et au moins un terminal de communication 2₁...2ₙ₋₁ destinataire de la communication requise.

Le dispositif de gestion x1 comporte un déclencheur de clôture de communication x10. Le déclencheur x10 est apte à déclencher une clôture de la communication en cours en fonction d'un niveau sonore vocal détecté pendant une durée prédéterminée lors de la communication en cours.

Ce déclencheur x10 commande *stp* la clôture de la communication en cours entre au moins deux terminaux de communication 1, 2₁...2ₙ₋₁. Le dispositif de gestion x1 commandant la clôture de communication en cours est implémenté dans au moins un des terminaux de communication 1, 2₁... 2ₙ₋₁ impliqué dans la communication en cours et/ou le dispositif de communication 3 ayant établie la communication en cours.

En particulier, le dispositif de gestion x1 comporte un détecteur x11 de niveau sonore vocal recevant soit le flux *f* complet des échanges de la communication en cours, c'est-à-dire sans distinction de la provenance, soit au moins un des flux f1, f2, ... fn émis par au moins un des terminaux de communication, respectivement 1, 2₁...2ₙ₋₁, participant à la communication en cours.

En particulier, le dispositif de gestion x1, respectivement 11, 21₁...21ₙ₋₁, 31, comporte un module de surveillance X12 surveillant au moins le module de communication, respectivement 2₁... 2ₙ₋₁, 3. Ainsi, le module de surveillance x12 déclenche le dispositif de gestion , en particulier, le déclencheur de clôture de communication x10 lorsqu'il détecte ou est informé *cok* d'un établissement d'une communication .

En particulier, le dispositif de gestion x1 comporte un module de maintien de communication x13 empêchant toute clôture automatique de la communication en cours en fonction de paramètre pp de la communication en cours. Notamment, le dispositif de gestion x1 comporte un court-circuit x14 placé sur la sortie de commande de clôture du déclencheur de clôture de communication x10. Le court-circuit x14 est commandé par le module de maintien x13.

Comme l'illustre la figure 3a, pour établir une communication, un premier terminal de communication, le terminal de communication requérant 1, en particulier son module de communication 10, envoie à au moins un terminal de communication destinataire 2₁... 2ₙ₋₁ une requête 1.c_req(T1→T2...Tn) d'établissement de communication avec cet au moins un deuxième terminal de communication 2₁...2ₙ₋₁. Cette requête 1.c_req(T1→T2...Tn) d'établissement de communication est notamment relayé par un dispositif de communication 3 d'un réseau de communication, en particulier son module de communication 30 apte à établir une session de communication : 1a.c_req(T1→T2)... 1n.c_req(T1→Tn).

Chacun du ou des terminaux de communication destinataire 2₁... 2ₙ₋₁ répondent à cette requête, respectivement 1a.c_req(T1→T2)... 1n.c_req(T1→Tn), soit en acceptant : 2a. ok... 2n. ok, soit en refusant la communication déclenchant dans le cas d'une acception l'ouverture d'une session de communication entre le terminal requérant 1 et les terminaux destinataires 2₁... 2ₙ₋₁ ayant acceptés la communication : 3.css.

Dans le cas où la requête d'établissement a été relayée par un dispositif de communication 3, le dispositif de communication 3 déclenche l'ouverture de la session de communication 3.css et, éventuellement, relaie les réponses vers le terminal requérant.

La communication étant établie, des flux 4.f sont échangés entre les terminaux de communications participant à la communication, à savoir le terminal requérant 1, et les terminaux destinataires ayant acceptés la communication 2₁... 2ₙ₋₁.

En parallèle de l'établissement de la communication 3.css, le ou les dispositifs de gestion 11, 21₁...21ₙ₋₁, 31 sont déclenchés 5.trg, 5a.trg....5n.trg, 5₃.trg, Comme l'illustre la figure 3b, la commande de déclenchement trg est reçue, notamment, par le déclencheur de clôture de communication x10.

En particulier, le module de surveillance x12 déclenche *trg* la gestion automatique des communication, par exemple soit en déclenchant, soit en démarrant le déclencheur de clôture de communication x10. Le module de surveillance x12 capture, détecte ou reçoit soit une commande d'ouverture de session de communication 3.css soit une acception d'une communication *co*k. Un module de communication 10, 20₁... 20ₙ₋₁, 30 du dispositif implémentant le dispositif de gestion 11, 21₁...21ₙ₋₁, 31 mis en œuvre envoie, notamment, cette information: ouverture de session ou acception de communication au dispositif de gestion x10 (respectivement 11, 21₁...21ₙ₋₁, 31) et, en particulier, à son module de surveillance x12.

Le déclencheur de clôture de communication x10 détermine en fonction du niveau sonore vocal *nsv* de la communication en cours si la communication est intempestive soit parce que le terminal requérant a demandé involontairement la mise en communication, soit parce que le terminal destinataire a accepté involontairement la demande de mise en communication. Pour cela, soit le déclencheur reçoit soit le niveau sonore vocal global *nsv* de communication en cours, soit le niveau sonore vocal d'au moins un flux *nsv(fᵢ)* émis par l'un des terminaux participant à la communication en cours (ces niveaux sonore étant éventuellement fournis pour, voire moyennée sur, une durée prédéterminé Δ: Δ *nsv(fᵢ)*) soit directement le flux global f ou au moins un des flux fᵢ émis par l'un des terminaux participant à la communication en cours (en particulier, le flux émis par le terminal de communication sur lequel est implémenté le dispositif de gestion x1).

Eventuellement ces informations (niveaux sonores vocales et/ou flux) sont transmis au déclencheur x10 sur requête nsvrq soit à un détecteur de niveau sonore, par exemple un détecteur x11 implémenté dans le dispositif de gestion x1, soit au module de communication du dispositif implémentant le dispositif de gestion x1...

Lorsque le déclencheur x10 détermine que la communication en cours est intempestive, il envoie une commande de clôture de communication *stp* au module de communication 10, 20₁...20ₙ₋₁, 30 du dispositif 1, 2₁...2ₙ₋₁,3 implémentant le dispositif de gestion, x1, soit respectivement 11, 21₁...21ₙ₋₁, 31 . Cette commande peut être soit une commande globale *cstp* clôturant la communication entre tous les terminaux participants (notamment dans le cas d'une communication entre deux terminaux et/ou dans le cas d'une communication requise de manière intempestive), soit une commande ciblée *f₁stp ...fₙstp* de clôture de la participation d'un terminal à la communication en cours (notamment dans le cas d'acceptation intempestive d'une communication entre au moins 3 terminaux de communication).

En particulier, le dispositif de gestion x1 comporte un détecteur de niveau sonore vocal x11, éventuellement implémenté dans le déclencheur x10 (non illustré). Le détecteur x11 reçoit soit le flux global f ou au moins un des flux fᵢ émis par l'un des terminaux participant à la communication en cours (en particulier, le flux émis par le terminal de communication sur lequel est implémenté le dispositif de gestion x1). Le détecteur x11 détermine pour chaque flux reçu un niveau sonore vocal : respectivement un niveau sonore vocal global *nsv* de communication en cours, un niveau sonore vocal d'au moins un flux *nsv(fᵢ)* émis par l'un des terminaux participant à la communication en cours. Le détecteur x11 fournit, voire moyenne, ces niveaux sonore sur une durée prédéterminé Δ: Δ*nsv(fᵢ).*

Eventuellement, le détecteur x11 vérifie le niveau sonore vocal par rapport à au moins un seuil prédéterminé (par exemple un seuil correspondant au silence et/ou un seuil correspondant à une conversation inaudible pour un groupe d'utilisateur prédéfini...), et fournit une information concernant le niveau sonore vocal résultant de cette vérification au déclencheur x10.

Le détecteur de niveau sonore x11 fournit au moins un niveau sonore ou une information concernant le niveau sonore vocal au déclencheur x10 dès que le dispositif de gestion x1 ou le déclencheur x10 est déclenché par l'établissement d'une communication ou sur requête nsvrq, par exemple du déclencheur x10, ou dès que l'information sur le niveau sonore vocal indique une communication intempestive (par exemple lors que le détecteur a vérifié que le niveau sonore vocal du flux était inférieur à un seuil prédéterminé pendant une durée prédéterminée associée au seuil en question).

En particulier, le dispositif de gestion x1 comporte un module de maintien de communication x13 recevant des données pp concernant la communication en cours, notamment des paramètres de la communication en cours tels que des identifiants, des paramètres d'utilisation d'au moins un des terminaux de communication participant à la communication en cours.

Le module de maintien x13 détermine si la communication en cours doit être traitée de manière exceptionnelle par le dispositif de gestion x1 en fonction des données reçues pp. Par exemple, dans le cas où la communication est destiné à un centre de secours : pompier, SAMU, police, service d'assistance médicale... le module de maintien x13 déterminera à partir de l'identifiant du terminal destinataire que la communication doit être maintenue même en cas de silence prolongé et de conversation inaudible. Autre exemple, dans le cas où l'un des terminaux participant à la communication en cours est en mode muet, en mode double appel en cours ,en mode haut-parleur ..., le module de maintien x13 déterminera à partir de ses paramètres d'utilisation du terminal de communication participant à la communication que la communication doit être maintenue même en cas respectivement de silence prolongé, de conversation inaudible en provenance du terminal de communication ainsi paramétré.

Le module de maintienx13 enverra alors une commande de maintien cnt soit au déclencheur x10, soit un court-circuit x14. En particulier, la commande de maintien cnt empêchera soit toute clôture de communication en cours, soit uniquement la clôture de la participation d'un terminal à la communication en cours (dans le cas notamment de décision de maintien de paramètre d'utilisation de terminaux).

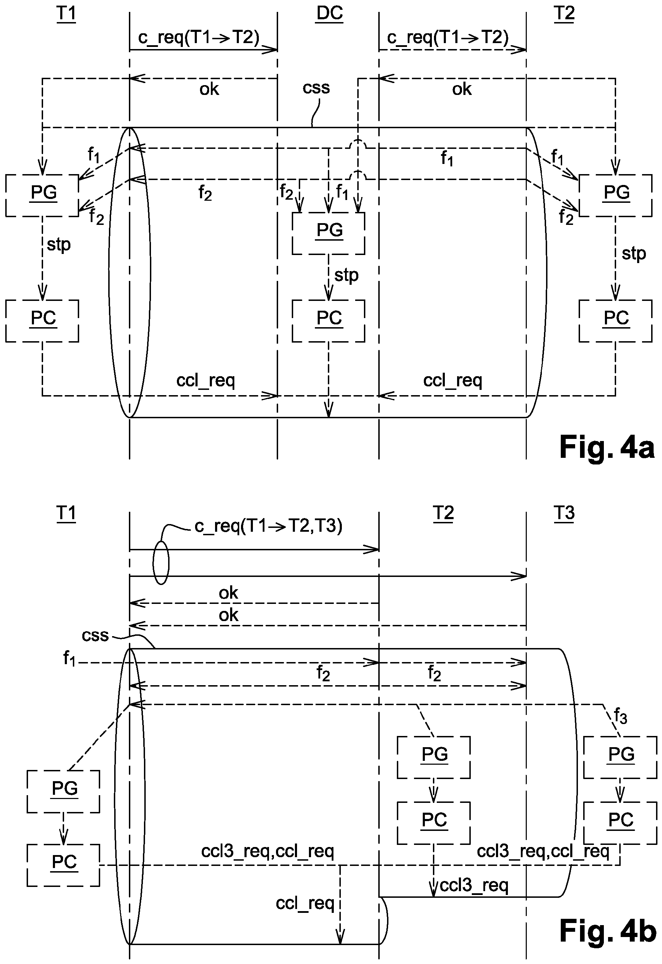

La figure 4a illustre un diagramme d'échanges simplifié illustrant la mise en œuvre d'un procédé de gestion selon l'invention dans le cas d'une communication entre deux terminaux de communication.

Un terminal requérant T1 requiert c_req(T1→T2) un établissement d'une communication avec un terminal destinataire T2 d'un réseau de communication à un dispositif de communication DC. Suite à cette requête, le dispositif de communication DC placé dans le réseau de communication établie la communication css entre les deux terminaux de communication T1 et T2.

En particulier, le dispositif de communication DC relaie la requête c_req(T1→T2) au terminal destinataire T2. Eventuellement, la communication n'est établie par le dispositif de communication DC que si le terminal destinataire T2 répond à la requête en acceptant ok l'établissement de communication. Dans ce cas, le dispositif de communication DC relaie, notamment aussi la réponse à la requête, telle que l'acception ok, au terminal requérant T1.

En particulier, l'établissement de la communication css déclenche au moins un procédé de gestion PG. Un ou plusieurs des dispositifs participant à la communication en cours, en particulier le terminal requérant T1 et/ou le terminal destinataire T2 et/ou le dispositif de communication DC, met en œuvre le procédé de gestion PG selon l'invention.

Durant la communication, le terminal requérant T1 émet des flux f1 à destination du terminal destinataire T2 éventuellement relayés par le dispositif de communication DC, et le terminal destinataire T2 émet des flux f2 à destination du terminal requérant T1, le cas échéant relayé aussi par le dispositif de communication DC.

Un ou plusieurs de ces flux f1, f2 sont éventuellement reçus aussi par le procédé de gestion PG ou analyser par le procédé de gestion pour déterminer leurs niveaux sonores vocaux respectifs et décider de déclencher une clôture de la communication en cours en fonction des niveaux sonores déterminés. Alternativement le niveau sonore vocal global de ces flux f1, f2 et/ou le niveau sonore vocal d'un ou plusieurs de ces flux f1, f2 sont éventuellement reçus par le procédé de gestion PG ou analyser par le procédé de gestion pour décider de déclencher une clôture de la communication en cours en fonction des niveaux sonores reçus et/ou analysés.

Lorsqu'au moins un procédé de gestion PG d'au moins un des dispositifs : terminal requérant T1, terminal destinataire T2, dispositif de communication 3, décide de déclencher la clôture de la communication en cours, il envoie une commande *stp* au procédé de communication PC du dispositif en question, respectivement terminal requérant T1, terminal destinataire T2, dispositif de communication 3, qui transmet une requête de clôture de communication ccl_req aux autres dispositifs impliqués dans la communication en cours, respectivement le terminal destinataire T2 et le dispositif de communication 3, le terminal requérant T1 et le dispositif de communication 3, le terminal requérant T1 et le terminal destinataire T2. La communication est alors close.

Ainsi, lors d'une requête intempestive de communication de la part du terminal T1 :
- si le terminal T1 met en œuvre un procédé de gestion traitant uniquement les flux sortants f1, le procédé de gestion mis en œuvre par le terminal T1 peut déclencher la clôture de la communication qu'il a requis de manière intempestive ;
- si le terminal T1 ne met pas en œuvre de procédé de gestion PG , mais qu'un tel procédé de gestion PG est mis en œuvre par le dispositif de communication DC ou le deuxième terminal T2, la clôture de communication ne pourra être requise ccl_req par ces dispositifs que si le procédé de gestion analyse les flux entrants f1.

De même, lors d'une acceptation intempestive de communication de la part du terminal T2 :
- si le terminal T2 met en œuvre un procédé de gestion traitant uniquement les flux sortants f2, le procédé de gestion mis en œuvre par le terminal T2 peut déclencher la clôture de la communication qu'il a accepté de manière intempestive ;
- si le terminal T2 ne met pas en œuvre de procédé de gestion PG , mais qu'un tel procédé de gestion PG est mis en œuvre par le dispositif de communication DC ou le premier terminal T1, la clôture de communication ne pourra être requise ccl_req par ces dispositifs que si le procédé de gestion analyse les flux entrants f2.

La figure 4b illustre un diagramme d'échanges simplifié illustrant la mise en œuvre d'un procédé selon l'invention dans le cas d'une conférence entre trois terminaux de communication.

Un terminal requérant T1 requiert c_req(T1→T2, T3) un établissement d'une communication avec deux terminaux destinataires T2 et T3 d'un réseau de communication. Suite à cette requête, la communication css est établie entre les trois terminaux de communication T1, T2 et T3. Eventuellement, la communication n'est établie qu'avec les terminaux dentinaires T2, T3 ayant répondu à la requête en acceptant ok l'établissement de communication à destination du termina requérant T1.

En particulier, l'établissement de la communication css déclenche au moins un procédé de gestion PG. Un ou plusieurs des terminaux de communications T1, T2, T3 participant à la communication en cours met en œuvre le procédé de gestion PG selon l'invention.

Durant la communication, le terminal requérant T1 émet des flux f1 à destination des terminaux destinataires T2 et T3, le terminal destinataire T2 émet des flux f2 à destination du terminal requérant T1 et de l'autre terminal destinataire T3, et le terminal destinataire T3 émet des flux f3 à destination du terminal requérant T1 et de l'autre terminal destinataire T2.

Un ou plusieurs de ces flux f1, f2, f3 sont éventuellement reçus aussi par le procédé de gestion PG ou analyser par le procédé de gestion pour déterminer leurs niveaux sonores vocaux respectifs et décider de déclencher une clôture de la communication en cours en fonction des niveaux sonores déterminés. Alternativement le niveau sonore vocal global de ces flux f1, f2, f3 et/ou le niveau sonore vocal d'un ou plusieurs de ces flux f1, f2,f3 sont éventuellement reçus par le procédé de gestion PG ou analyser par le procédé de gestion pour décider de déclencher une clôture de la communication en cours en fonction des niveaux sonores reçus et/ou analysés.

Lorsqu'au moins un procédé de gestion PG d'au moins un des terminaux T1, T2, T3, décide de déclencher la clôture de la communication en cours, il envoie une commande *stp* au procédé de communication PC du terminal en question, respectivement terminal requérant T1, terminal destinataire T2, terminal destinataire T3, qui transmet une requête de clôture de communication ccl_req aux autres dispositifs impliqués dans la communication en cours, respectivement le terminal destinataire T2 et le dispositif de communication 3, le terminal requérant T1 et le dispositif de communication 3, le terminal requérant T1 et le terminal destinataire T2. La communication est alors close.

Ainsi, lors d'une requête intempestive de communication de la part du terminal T1 :
- si le terminal T1 met en œuvre un procédé de gestion traitant uniquement les flux sortants f1, le procédé de gestion mis en œuvre par le terminal T1 peut déclencher la clôture de la communication qu'il a requis de manière intempestive ;
- si le terminal T1 ne met pas en œuvre de procédé de gestion PG , mais qu'un tel procédé de gestion PG est mis en œuvre par au moins l'un des terminaux destinataires T2, T3, la clôture de communication ne pourra être requise ccl_req par ces terminaux destinataires que si le procédé de gestion analyse les flux entrants f1.

De même, lors d'une acceptation intempestive de communication de la part d'un terminal destinataire T2 ou T3:
- si le terminal destinataire T2 ou T3 met en œuvre un procédé de gestion traitant uniquement les flux sortants f2 ou f3, le procédé de gestion mis en œuvre par le terminal T2 ou T3 peut déclencher la clôture de la communication qu'il a accepté de manière intempestive ;
- si le terminal T2 ou T3 ne met pas en œuvre de procédé de gestion PG , mais qu'un tel procédé de gestion PG est mis en œuvre par l'autre terminal destinataire T3 ou T2 ou le terminal requérant T1, la clôture de communication ne pourra être requise ccl_req par ces dispositifs que si le procédé de gestion analyse les flux entrants f2 ou f3.

En outre, dans le cas d'une acceptation intempestive de communication de la part d'un terminal destinataire (T3 dans notre exemple), la détermination par le procédé de gestion de l'acceptation intempestive par un seul des terminaux destinataires peut, de manière alternative, entrainer la commande, par le procédé de gestion PG, de déclenchement d'une clôture de participation ccl3_req de ce terminal destinataire T3 à la communication en cours. Ainsi, la communication entre les terminaux T1 et T2 pourra continuer sans être interrompue par une conversation inaudible en provenance de T3 ayant accepté involontairement la communication. La clôture de participation d'un terminal permettra ainsi de réduire le bruit audible lors d'une communication.

Eventuellement, au lieu d'une commande de clôture de participation à une communication, le procédé de gestion, notamment lorsqu'il est mis en œuvre par le terminal en question T3, commandera la modification de paramètre du terminal de communication, notamment le passage en mode muet. Ce passage en mode muet permettra de limiter le bruit dans une communication impliquant au moins trois terminaux de communication tout en évitant des coupures automatiques intempestives pour les utilisateurs de terminaux de communication qui sont spectateurs de la communication, par exemple lors de conférence téléphonique.

L'invention vise aussi un support. Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique ou encore un moyen d'enregistrement magnétique, par exemple une disquette ou un disque dur. D'autre part, le support d'informations peut être un support transmissible tel qu'un signal électrique ou optique qui peut être acheminé via un câble électrique ou optique, par radio ou par d'autres moyens. Le programme selon l'invention peut être en particulier téléchargé sur un réseau notamment de type Internet. Alternativement, le support d'informations peut être un circuit intégré dans lequel le programme est incorporé, le circuit étant adapté pour exécuter ou pour être utilisé dans l'exécution du procédé en question.

Dans une autre implémentation, l'invention est mise en œuvre au moyen de composants logiciels et/ou matériels. Dans cette optique le terme module peut correspondre aussi bien à un composant logiciel ou à un composant matériel. Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonction selon la description ci-dessous. Un composant matériel correspond à tout élément d'un ensemble matériel (ou hardware) apte à mettre en œuvre une fonction ou un ensemble de fonctions.

## Revendications

1. Procédé de gestion automatique de communication en cours entre au moins deux terminaux de communication : un terminal de communication (T1) requérant l'établissement d'une communication et au moins un terminal de communication destinataire (T2...Tn) de la communication requise, la communication en cours comportant plusieurs flux audio (f1, f2...fn) provenant des terminaux de communication (T1, T2...Tn), **caractérisé en ce que** le procédé de gestion (PG) comporte :
• un déclenchement automatique (CCL) d'une clôture de la communication en cours, le déclenchement étant effectué dès qu'un niveau sonore vocal (nsv) détecté sur un des flux audio (f1, f2...fn) de la communication en cours pendant une durée prédéterminée (Δ) lors de la communication en cours est inférieur à un seuil prédéterminé,
• une détermination du maintien automatique (CMT) d'une communication en cours en fonction d'au moins un paramètre (pp) prédéterminé de mode d'utilisation d'un terminal de communication de la communication en cours, la détermination de maintien (CMT) commande (cnt) l'empêchement de toute clôture automatique de communication de la communication en cours.

2. Procédé de gestion selon la revendication précédente **caractérisé en ce que** le procédé de gestion (PG) comporte une détection du niveau sonore vocale (DTCT) de la communication en cours.

3. Procédé de gestion selon la revendication précédente **caractérisé en ce que** le au moins un paramètre prédéterminé comporte au moins un des paramètres prédéterminés suivants :
• Un identifiant d'un terminal de communication destinataire de la communication en cours est un identifiant prédéterminé;
• Un paramètre de mode d'utilisation du terminal de communication (T1) requérant de la communication en cours est en mode muet.

4. Procédé de gestion selon l'une quelconque des revendications précédentes, **caractérisé en ce que** le procédé de gestion (PG) est déclenché par un établissement (CSTB) d'une communication entre les au moins deux terminaux de communication (T1, T2...Tn).

5. Procédé de gestion selon l'une quelconque des revendications précédentes, **caractérisé en ce que** le procédé de gestion (PG) est mis en œuvre par au moins un des dispositifs suivants :
• le terminal de communication requérant (T1),
• au moins un des au moins un terminaux de communication destinataires (T2...Tn),
• par un serveur de communication par lequel passent les flux audio (f1, f2...fn) durant la communication en cours.

6. Procédé de gestion selon l'une quelconque des revendications précédentes **caractérisé en ce que** la détection du niveau sonore vocal (DTCT) est effectuée sur le flux audio (f1) provenant du terminal de communication requérant (T1).

7. Procédé de gestion selon l'une quelconque des revendications précédentes **caractérisé en ce que** la détection du niveau sonore vocal (DTCT) est effectuée sur le flux audio (f2...fn) provenant d'au moins un des au moins un terminaux de communication destinataires (T2...Tn).

8. Procédé de gestion selon la revendication précédente, **caractérisé en ce que** la durée prédéterminée (Δ) est inférieure à la durée de communication avant basculement sur messagerie.

9. Procédé de gestion selon la revendication 7, **caractérisé en ce que**, lorsque la communication est effectuée entre un terminal de communication requérant (T1) et plusieurs terminaux de communication destinataires (T2...Tn), la clôture de communication (CCL) est déclenchée uniquement pour le terminal de communication destinataire (T2...Tn) dont provient un flux audio (f2...fn) dont le niveau sonore vocal (nsv) détecté est déclencheur d'une clôture de communication.

10. Programme comprenant des instructions de code de programme pour l'exécution des étapes du procédé de gestion (PG) automatique de communication selon l'une quelconque des revendications précédentes lorsque ledit programme est exécuté par un processeur.

11. Dispositif de gestion automatique de communication en cours entre au moins deux terminaux de communication : un terminal de communication requérant (1) l'établissement d'une communication et au moins un terminal de communication destinataire (2₁...2ₙ₋₁) de la communication requise, la communication en cours comportant plusieurs flux audio provenant des terminaux de communication, **caractérisé en ce que** le dispositif de gestion (11, 21₁...21ₙ₋₁, 31, x1) comporte :
• un déclencheur automatique (x10) de clôture de la communication en cours, le déclencheur étant apte à clore la communication en cours dès qu'un niveau sonore vocal (nsv) détecté sur un des flux audio (f1, f2...fn) de la communication en cours pendant une durée prédéterminée (Δ) lors de la communication en cours est inférieur à un seuil prédéterminé, et
• un module de maintien (x13) apte à déterminer un maintien automatique d'une communication en cours en fonction d'au moins un paramètre (pp) prédéterminé de mode d'utilisation d'un terminal de communication (T1, T2...Tn) de la communication en cours, le module de maintien (x13) étant apte à commander (cnt) l'empêchement de toute clôture automatique de communication de la communication en cours suite à la détermination du maintien.

12. Terminal de communication (1, 2₁...2ₙ₋₁) comportant :
• un module de communication (10, 20₁...20ₙ₋₁) avec au moins un terminal de communication (2₁...2ₙ₋₁, 1),
• un dispositif de gestion automatique (11, 21₁...21ₙ₋₁) de communication en cours entre le terminal de communication et au moins un autre terminal de communication selon la revendication précédente.

## Patentansprüche

1. Verfahren zur automatischen Verwaltung von laufender Kommunikation zwischen wenigstens zwei Kommunikationsendgeräten: einem Kommunikationsendgerät (T1), das die Einrichtung einer Kommunikation anfordert, und wenigstens einem Ziel-Kommunikationsendgerät (T2...Tn) der angeforderten Kommunikation, wobei die laufende Kommunikation mehrere Audioströme (f1, f2...fn) von den Kommunikationsendgeräten (T1, T2...Tn) umfasst, **dadurch gekennzeichnet, dass** das Verfahren zur Verwaltung (PG) umfasst:
• eine automatische Auslösung (CCL) einer Schließung der laufenden Kommunikation, wobei die Auslösung bewirkt wird, sobald ein Sprachschallpegel (nsv), der an einem der Audioströme (f1, f2...fn) der laufenden Kommunikation detektiert wird, während einer vorbestimmten Dauer (Δ) während der laufenden Kommunikation niedriger als ein vorbestimmter Schwellenwert ist,
• eine Bestimmung einer automatischen Aufrechterhaltung (CMT) einer laufenden Kommunikation in Abhängigkeit von wenigstens einem vorbestimmten Parameter (pp) der Nutzungsart eines Kommunikationsendgerätes der laufenden Kommunikation, wobei die Bestimmung der Aufrechterhaltung (CMT) die Verhinderung jeder automatischen Schließung von Kommunikation der laufenden Kommunikation steuert (cnt) .

2. Verfahren zur Verwaltung nach dem vorhergehenden Anspruch, **dadurch gekennzeichnet, dass** das Verfahren zur Verwaltung (PG) eine Detektion des Sprachschallpegels (DTCT) der laufenden Kommunikation umfasst.

3. Verfahren zur Verwaltung nach dem vorhergehenden Anspruch, **dadurch gekennzeichnet, dass** der wenigstens eine vorbestimmte Parameter wenigstens einen der folgenden vorbestimmten Parameter umfasst:
• Eine Kennung eines Ziel-Kommunikationsendgerätes der laufenden Kommunikation ist eine vorbestimmte Kennung;
• ein Parameter der Nutzungsart des anfordernden Kommunikationsendgerätes (T1) der laufenden Kommunikation ist im Stummschaltmodus.

4. Verfahren zur Verwaltung nach einem der vorhergehenden Ansprüche, **dadurch gekennzeichnet, dass** das Verfahren zur Verwaltung (PG) durch eine Einrichtung (CSTB) einer Kommunikation zwischen den wenigstens zwei Kommunikationsendgeräten (T1, T2...Tn) ausgelöst wird.

5. Verfahren zur Verwaltung nach einem der vorhergehenden Ansprüche, **dadurch gekennzeichnet, dass** das Verfahren zur Verwaltung (PG) von wenigstens einer der folgenden Vorrichtungen durchgeführt wird:
• dem anfordernden Kommunikationsendgerät (T1),
• wenigstens einem des wenigstens einen Ziel-Kommunikationsendgerätes (T2...Tn),
• von einem Kommunikationsserver, über den die Audioströme (f1, f2...fn) während der laufenden Kommunikation laufen.

6. Verfahren zur Verwaltung nach einem der vorhergehenden Ansprüche, **dadurch gekennzeichnet, dass** die Detektion des Sprachschallpegels (DTCT) an dem vom anfordernden Kommunikationsendgerät (T1) kommenden Audiostrom (f1) durchgeführt wird.

7. Verfahren zur Verwaltung nach einem der vorhergehenden Ansprüche, **dadurch gekennzeichnet, dass** die Detektion des Sprachschallpegels (DTCT) an dem von wenigstens einem des wenigstens einen Ziel-Kommunikationsendgerätes (T2...Tn) kommenden Audiostrom (f2...fn) durchgeführt wird.

8. Verfahren zur Verwaltung nach dem vorhergehenden Anspruch, **dadurch gekennzeichnet, dass** die vorbestimmte Dauer (Δ) kürzer als die Kommunikationsdauer vor Umschaltung auf Nachrichtenübermittlung ist.

9. Verfahren zur Verwaltung nach Anspruch 7, **dadurch gekennzeichnet, dass**, wenn die Kommunikation zwischen einem anfordernden Kommunikationsendgerät (T1) und mehreren Ziel-Kommunikationsendgeräten (T2...Tn) durchgeführt wird, die Schließung der Kommunikation (CCL) allein für das Ziel-Kommunikationsendgerät (T2...Tn) ausgelöst wird, von dem ein Audiostrom (f2...fn) kommt, dessen detektierter Sprachschallpegel (nsv) eine Kommunikationsschließung auslöst.

10. Programm, welches Programmcodeanweisungen zur Ausführung der Schritte des Verfahrens zur automatischen Verwaltung (PG) von Kommunikation nach einem der vorhergehenden Ansprüche, wenn das Programm von einem Prozessor ausgeführt wird, umfasst.

11. Vorrichtung zur automatischen Verwaltung von laufender Kommunikation zwischen wenigstens zwei Kommunikationsendgeräten: einem Kommunikationsendgerät (1), das die Einrichtung einer Kommunikation anfordert, und wenigstens einem Ziel-Kommunikationsendgerät (2₁...2ₙ₋₁) der angeforderten Kommunikation, wobei die laufende Kommunikation mehrere Audioströme von den Kommunikationsendgeräten umfasst, **dadurch gekennzeichnet, dass** die Vorrichtung zur Verwaltung (11, 21₁...21ₙ₋₁, 31, x1) umfasst:
• einen automatischen Auslöser (x10) einer Schließung der laufenden Kommunikation, wobei der Auslöser geeignet ist, die laufende Kommunikation zu schließen, sobald ein Sprachschallpegel (nsv), der an einem der Audioströme (f1, f2...fn) der laufenden Kommunikation detektiert wird, während einer vorbestimmten Dauer (Δ) während der laufenden Kommunikation niedriger als ein vorbestimmter Schwellenwert ist, und
• ein Aufrechterhaltungsmodul (x13), das geeignet ist, eine automatische Aufrechterhaltung einer laufenden Kommunikation in Abhängigkeit von wenigstens einem vorbestimmten Parameter (pp) der Nutzungsart eines Kommunikationsendgerätes (T1, T2...Tn) der laufenden Kommunikation zu bestimmen, wobei das Aufrechterhaltungsmodul (x13) geeignet ist, im Anschluss an die Bestimmung der Aufrechterhaltung die Verhinderung jeder automatischen Schließung von Kommunikation der laufenden Kommunikation zu steuern (cnt) .

12. Kommunikationsendgerät (1, 2₁...2ₙ₋₁), welches umfasst:
• ein Modul zur Kommunikation (10, 20₁...20ₙ₋₁) mit wenigstens einem Kommunikationsendgerät (2₁...2ₙ₋₁, 1),
• eine Vorrichtung zur automatischen Verwaltung (11, 21₁...21ₙ₋₁) von laufender Kommunikation zwischen dem Kommunikationsendgerät und wenigstens einem weiteren Kommunikationsendgerät nach dem vorhergehenden Anspruch.

## Claims

1. Method for automatic management of communication in progress between at least two communication terminals: a communication terminal (T1) requesting the establishment of a communication and at least one communication terminal (T2...Tn) which is a recipient of the requested communication, the communication in progress comprising several audio streams (f1, f2...fn) originating from the communication terminals (T1, T2...Tn), **characterized in that** the management method (PG) comprises:
• an automatic triggering (CCL) of a closure of the communication in progress, the triggering being performed as soon as a voice sound level (nsv) detected on one of the audio streams (f1, f2...fn) of the communication in progress for a predetermined duration (Δ) during the communication in progress is below a predetermined threshold,
• a determination of the automatic maintaining (CMT) of a communication in progress as a function of at least one predetermined parameter (pp) of mode of use of a communication terminal of the communication in progress, the determination of maintaining (CMT) ordering (cnt) the prevention of any automatic communication closure of the communication in progress.

2. Management method according to the preceding claim, **characterized in that** the management method (PG) comprises a detection of the voice sound level (DTCT) of the communication in progress.

3. Management method according to the preceding claim, **characterized in that** the at least one predetermined parameter comprises at least one of the following predetermined parameters:
• an identifier of a communication terminal which is a recipient of the communication in progress is a predetermined identifier;
• a parameter of mode of use of the communication terminal (T1) requesting the communication in progress is in mute mode.

4. Management method according to any one of the preceding claims, **characterized in that** the management method (PG) is triggered by an establishment (CSTB) of a communication between the at least two communication terminals (T1,T2...Tn).

5. Management method according to any one of the preceding claims, **characterized in that** the management method (PG) is implemented by at least one of the following devices:
• the requesting communication terminal (T1),
• at least one of the at least one recipient communication terminals (T2... Tn),
• through a communication server through which the audio streams (f1, f2...fn) pass during the communication in progress.

6. Management method according to any one of the preceding claims, **characterized in that** the detection of the voice sound level (DTCT) is performed on the audio stream (f1) originating from the requesting communication terminal (T1).

7. Management method according to any one of the preceding claims, **characterized in that** the detection of the voice sound level (DTCT) is performed on the audio stream (f2...fn) originating from at least one of the at least one recipient communication terminals (T2...Tn) .

8. Management method according to the preceding claim, **characterized in that** the predetermined duration (Δ) is less than the duration of communication before toggling over to messaging.

9. Management method according to Claim 7, **characterized in that**, when the communication is performed between a requesting communication terminal and several recipient communication terminals (T2...Tn), communication closure (CCL) is triggered only for the recipient communication terminal (T2 ...Tn) from which an audio stream (f2...fn) originates for which the detected voice sound level (nsv) triggers a communication closure.

10. Program comprising program code instructions for the execution of the steps of the method of automatic management (PG) of communication according to any one of the preceding claims when said program is executed by a processor.

11. Device for automatic management of communication in progress between at least two communication terminals: a communication terminal requesting (1) the establishment of a communication and at least one communication terminal (2₁... 2ₙ₋₁) which is a recipient of the requested communication, the communication in progress comprising several audio streams originating from the communication terminals, **characterized in that** the management device (11, 21_{1...}21ₙ₋₁, 31, x1) comprises:
• an automatic trigger (x10) of closure of the communication in progress, the trigger being capable of closing the communication in progress as soon as a voice sound level (nsv) detected on one of the audio streams (f1, f2...fn) of the communication in progress for a predetermined duration (Δ) during the communication in progress is below a predetermined threshold, and
• a maintaining module (x13) capable of determining an automatic maintaining of a communication in progress as a function of at least one predetermined parameter (pp) of mode of use of a communication terminal (T1,T2... Tn) of the communication in progress, the maintaining module (x13) being capable of ordering (cnt) the prevention of any automatic communication closure of the communication in progress following the determination of the maintaining.

12. Communication terminal (1, 2₁...2ₙ₋₁) comprising:
• a module for communication (10, 20₁...20ₙ₋₁) with at least one communication terminal (2₁...2ₙ₋₁, 1),
• a device for automatic management (11, 21₁...21ₙ₋₁) of communication in progress between the communication terminal and at least one other communication terminal according to the preceding claim.
